# EUROPEAN PATENT SPECIFICATION

(11) **EP 0 817 934 B1**
(45) Date of publication and mention of the grant of the patent: **26.05.1999**
(21) Application number: 96904378.5
(22) Date of filing: 04.03.1996
(51) Int. Cl.: F16K 41/12, F16J 3/02

(54) **HOUSING FOR A GAS VALVE OR THE LIKE AND METHOD FOR CONNECTING TWO HOUSE PORTIONS TOGETHER**
GEHÄUSE FÜR EIN GASVENTIL UND VERFAHREN ZUM VERBINDEN VON ZWEI GEHÄUSETEILEN
CORPS POUR SOUPAPE DE GAZ OU ANALOGUE, ET PROCEDE POUR RELIER L'UNE A L'AUTRE DEUX PARTIES DE CE CORPS

(30) Priority: 02.03.1995 NL 9500406
(43) Date of publication of application: 14.01.1998
(73) Proprietor: ASCO CONTROLS B.V., 3925 BD Scherpenzeel (NL)
(72) Inventor: VAN DER ZEE, Jan, NL-3925 BD Scherpenzeel (NL)
(74) Representative: Louet Feisser, Arnold
(86) International application number: NL9600100
(87) International publication number: WO9627096

(56) References cited:
- EP-A- 0 297 260
- DE-A- 2 321 102
- DE-C- 813 161
- DE-U- 9 207 410
- FR-A- 2 084 641
- US-A- 2 532 568

## Description

The invention relates to a housing for a gas valve or the like, said housing comprising a first housing portion, which is connected to a second housing portion with the interposition of a flexible sealing element, whereby each housing portion is provided with a substantially circular contact surface, against which the sealing element abuts. A housing of this type may also be used for components for fluid control and fluid power application, whereby there may be a pressure difference between the space within the housing and the ambient atmosphere. Consequently the term gas valve used herein is to be considered as an example of such a component.

A housing of this type comprises two or more housing portions, which together must form a gas-tight or liquid-tight envelope of the component. It is very important, therefore, that the sealing element is capable of providing an adequate seal between the housing portions. In addition to that the seal must be reliable, that is, also when fitted less expertly the seal must meet all the requirements to be made thereof.

With a usual seal, whereby two contact surfaces, between which a flexible sealing element is provided, are pressed together, the magnitude of the press-on force determines the quality of the seal, and it is often difficult to ensure that the required press-on force is applied, in particular when the fitting operation must be carried out without using any special tools.

DE-C-813.161 shows two housing portions with spaced apart contact surfaces and a sealing element being a membrane.

EP-A-0 297 260 discloses a fluid control component having a first housing portion, which is connected to a second housing portion with the interposition of a flexible sealing element, whereby each housing portion is provided with a substantially circular contact surface, against which the sealing element abuts. The sealing element is a membrane and the two housing portions are clamped together by the clamping force of an annular clamping means which engages both housing portions from the outside.

The object of the invention is to provide an accurate fixation of the two housing portions relative to each other which can be effected in a simple and reliable manner, whereby an adequate and reliable seal between two housing portions can be achieved.

In order to accomplish that objective the two housing portions are kept a predetermined distance apart by connecting means comprising a clip connection, whereby a spring clip engages parts of said first housing portion as well as parts of the second housing portion whilst fixing said portions with respect to each other. Preferably said clip consists of a substantially annular metal bar having a circular cross-section, which is capable of abutment against radially oriented stop surfaces of the first and the second housing portions.

According to another preferred aspect of the invention the one housing portion is near its contact surface provided with a groove which is open in radially outward direction, in which groove said clip may be provided, said groove at a number of locations being provided with a recess extending behind said clip, into which connecting parts of the other housing portion can extend, said connecting parts having a hook-shaped part, which is capable of moving the clip against its spring force when the housing portions are brought into abutment with each other, and which is provided with a stop surface which abuts against said clip, thus preventing the housing portions from being moved apart. In this manner the maximum spacing between the contact surfaces is determined, whilst the contact surfaces are kept in their relative positions by the force of the sealing element pressing the contact surfaces apart. This construction of the clip connection will be explained in more detail by means of an embodiment.

In order to be able to position the two housing portions precisely with respect to each other, the connecting parts are according to another preferred aspect of the invention provided with a cylindrical stop surface at their radial inner side, which stop surface surrounds a cylindrical surface of said one housing portion in the interconnected position of the housing portions.

The invention furthermore relates to a method for connecting two housing portions together, as will be defined in the claims.

Hereafter a few embodiments of a housing of a gas valve will be described by way of illustration with reference to the drawing.
Figure 1 is a sectional view of the gas valve;
Figure 2 is a side view of the gas valve;
Figure 3 is a plan view of the gas valve;
Figure 4 is an exploded view of the gas valve;
Figure 5 shows an alternative valve body;
Figure 6 shows a detail indicated at VI in Figure 5;
Figure 7 shows a second embodiment of a gas valve;
Figure 8 shows a detail indicated at VIII in Figure 7;
Figure 9 is a sectional view of the valve body of the second embodiment;
Figure 10 shows a detail indicated at X in Figure 9;
Figures 11 and 12 are perspective views of the valve body of the second embodiment; and
Figure 13 shows a detail of another embodiment.

The Figures are merely schematic representations of the embodiments, whereby like parts are numbered alike in the various Figures.

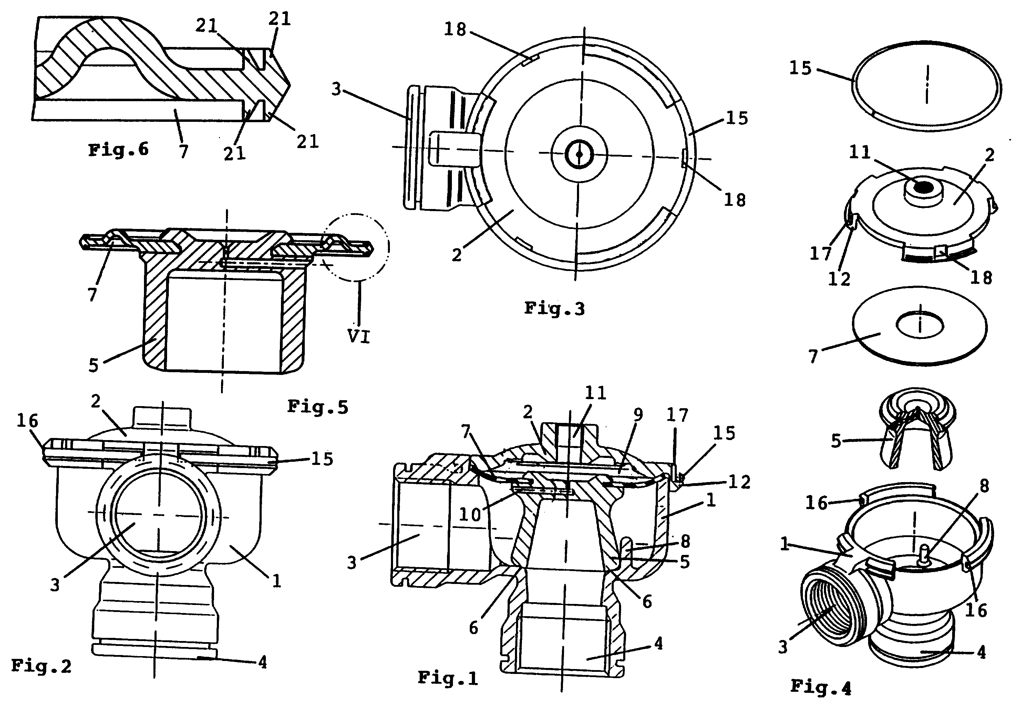

Figure 1 shows the various parts of the gas valve in sectional view. The gas valve comprises a housing which consists of a valve housing 1 and a cover 2. Valve housing 1 thereby comprises a gas inlet 3 and a gas outlet 4. Both openings are provided with connecting means, so that gas pipes can be connected thereto. In the illustrated embodiment said means consist of internal screw thread in openings 3, 4, so that the end of an externally threaded pipe can be screwed into said openings. By suitably selecting the appropriate shape of the screw thread or by interposing a sealing element a gas-tight seal can be obtained.

In the position of the gas valve shown in Figure 1 said gas valve is closed, in which position a valve member 5 butts against the valve seat 6. Valve seat 6 is formed in such a manner that the gas resistance is minimal in the open position of the valve. Preferably valve seat 6 is designed to have a relatively large radius thereby, and valve member 5 forms a seal thereon in such a manner that the annular mating surface between valve member 5 and valve seat 6 lies on a cone surface.

Valve member 5 is connected to a membrane 7, which is fixed between the valve housing 1 and the cover 2 at its outside edge. The membrane 7 is flexible to such an extent that valve member 5 can be lifted off valve seat 6, so that a free passage of gas from gas inlet 3 to gas outlet 4 is realized. The housing 1 is provided with three guide bars 8 (only one being shown), which guide the valve member 5 during its movement.

In the embodiment according to Figure 1 the underside of membrane 7 is in direct contact with the gas inlet 3, so that the gas supply pressure is prevalent on this side of the membrane. A control chamber 9 is formed on the other side of the membrane 7, which control chamber 9 is connected to the gas inlet by means of a throttle channel 10. The cover 2 is furthermore provided with a connecting opening 11, via which said control chamber can be connected to a control unit (not shown). Said control unit (not shown) is capable of closing connecting opening 11, so that no gas can be displaced through connecting opening 11, whilst said control unit is furthermore capable of allowing gas to escape from control chamber 9 via connecting opening 11 in order to open the gas valve.

The operation of the gas valve shown in Figure 1 is as follows. As long as the passage of gas via connecting opening 11 is blocked, the gas valve will be closed because valve member 5 butts against valve seat 2. The gas supply pressure in gas inlet 3 is thereby higher than the gas pressure in gas outlet 4. The gas supply pressure is prevalent not only in gas inlet 3 and at the bottom side of membrane 7, but also in control chamber 9, which control chamber is connected to said gas inlet by means of throttle channel 10. As long as connecting opening 11 is closed, the resultant of the forces exerted on the membrane and the valve member will be directed downwards, as a result of which the gas valve will remain closed. The gas valve can be opened by allowing gas to escape from control chamber 9 via connecting opening 11, so that the gas pressure in control chamber 9 falls out. The resultant of the force exerted on the membrane and the valve member will be directed upwards thereby. The amount of gas that can be supplied via throttle channel 10 will thereby be insufficient to build up sufficient pressure in control chamber 9, so that the gas supply pressure prevailing at the bottom side of the membrane 7 will cause the gas valve to remain open until the discharge of gas via connecting opening 11 is stopped, so that a pressure will build up in control chamber 9 again as a result of gas being supplied to control chamber 9 via throttle channel 10, which pressure will cause the gas valve to close.

The control unit which is connected to connecting opening 11 may be a magnetic valve, which is connected directly to connecting opening 11. It is also possible for several gas valves to be controlled by a central control unit, so that a gas pipe to said central control unit is connected to connecting opening 11.

Figure 2 is a side view of the gas valve according to Figure 1, and Figure 3 is a plan view thereof.

Valve member 5 is attached to membrane 7 in that membrane 7 is fitted in a radially outward groove of valve member 5. Membrane 7 is to that end provided with a circular hole in the central part thereof, whereby the edge of said hole extends into said groove. The fitting of membrane 7 in said groove can take place by deformation of membrane 7, which is made of a flexible material. The hole in membrane 7 may also be sufficiently large to enable placing valve member 5 without said hole being expanded, whereby the valve member 5 is provided on membrane 7 with some play.

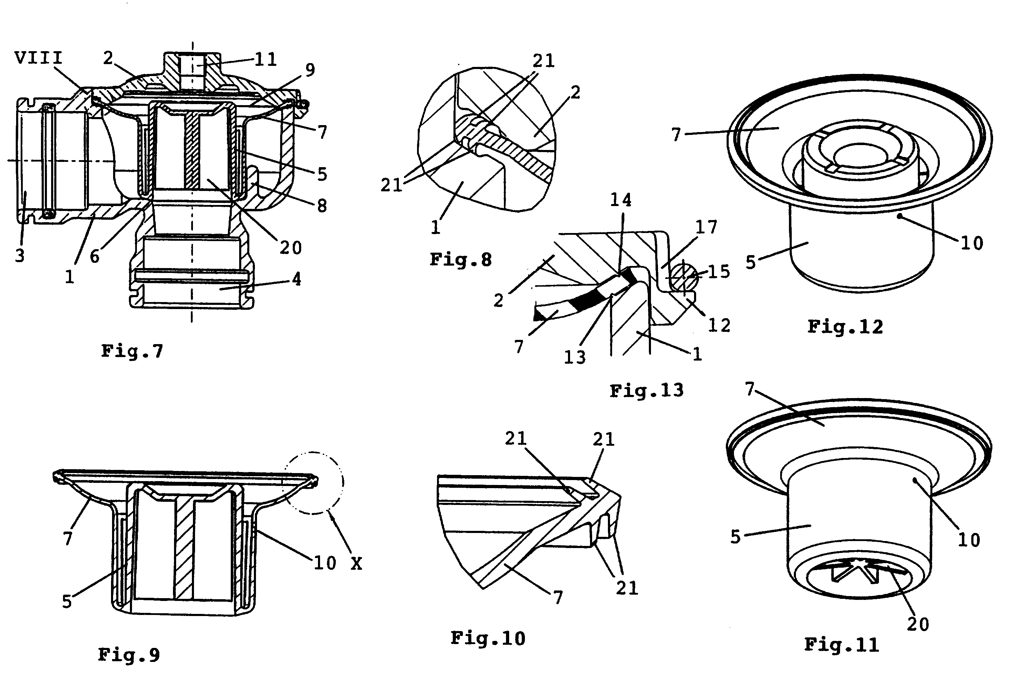

Since the fixation of membrane 7 between valve body 1 and cover 2 does not take place in a flat plane, but slightly obliquely, that is, according to the surface of a cone, the membrane is given a certain bias, which will keep the valve in its closed position when there is no pressure difference within the gas valve. Membrane 7 is fitted between valve housing 1 and cover 2 with some play, that is, the distance between valve housing 1 and cover 2 is slightly larger than the thickness of the membrane. As is shown in more detail in Figure 13, the fixing and sealing of the membrane may take place in that valve housing 1 and/or cover 2 are provided with one or more edges 13, 14, which are slightly pressed into the surface of membrane 7. In this manner an adequate fixation and an adequate seal are obtained with a predetermined position of cover 2 with respect to valve housing 1, without cover 2 and valve housing 1 being pressed together with a certain force.

Cover 2 is connected to valve housing 1 by means of a clip 15, which clip 15 substantially consists of a resilient annular round bar. Clip 15 is fitted in a radially outward groove 16 of the housing 1, which groove 16 comprises three segments of a circle, as is shown in particular in Figure 4. Clip 15 is retained within said groove 16, whereby at least one side wall of groove 16 forms a radial stop surface. Cover 2 is provided with a connecting part 17, which is likewise divided into three segments of a circle, which connecting part 17 may extend behind clip 15 when cover 2 is mounted on valve housing 1. Connecting part 17 has a hook-shaped part 12 comprising a sloping surface, which is capable of pushing clip 15 away against its spring force when cover 2 is being pressed on valve body 1. Connecting part 17 furthermore comprises a radially oriented stop surface, which butts against clip 15 in the position in which cover 2 is mounted on valve body 1. At the inner side the three parts of connecting part 17 form parts of a cylindrical stop surface, which is capable of abutment against corresponding parts of valve body 1, so that cover 2 is properly positioned with respect to valve body 1.

In this manner cover 2 is mounted on valve body 1 in a simple but highly effective manner, whereby clip 15 is first mounted on valve housing 1, after which cover 2 can be moved into position and snap down there. Furthermore cover 2 can be removed from valve housing 1 in a simple manner by removing clip 15 by means of a screwdriver, after which cover 2 can be detached from valve housing 1. Recesses 18 are provided in order to make it possible to remove clip 15, into which recesses the end of a screwdriver can be inserted. With the above-described clip connection cover 2 can be mounted on valve body 1 and be removed therefrom by hand, without using special tools, whilst an adequate seal is maintained. The sealing action of sealing element 7 will be retained as a result of the small amount of deformation thereof.

As is apparent in particular from Figure 1, the use of valve member 5 makes it possible to fit the valve seat centrally in the valve housing at the desired location, whilst the membrane 7 may be fitted near the cover 2, in order to obtain a control chamber having a minimum volume. The use of the valve member furthermore makes it possible to effect an optimum through-flow of the gas, because there is a large degree of freedom in selecting the shape of the valve seat.

Figure 5 shows an alternative embodiment of valve member 5 and membrane 7, whereby membrane 7 has a circumferential edge formed with ribs 21, as is shown on a larger scale in Figure 6. Said ribs 21 extend on either side of the membrane 7 and taper off from the membrane, seen in cross-sectional view. Ribs 21 thereby slope in the direction of the central axis of valve member 5, so that a gas pressure within valve body 1 will press the ribs 21 against parts of valve body 1 and cover 2 in such manner as to form a seal when the edge of membrane 7 is present between said parts. This will be explained in more detail with reference to Figure 8.

Figure 7 shows a second embodiment of the gas valve, wherein the valve body, which comprises membrane 7 as well as valve member 5, is integrally made of the same material, preferably plastic material. The part of the valve body which forms membrane 7 is relatively thin-walled, in order to obtain the required flexibility, whilst the part of the valve body which forms valve member 5 has a thicker wall and is moreover provided with strengthening ribs 20.

Figure 8 is a detailed view of the manner in which the circumferential edge of membrane 7 is clamped between valve housing 1 and cover 2. The edge of membrane 7 thereby fits in a chamber present between valve housing 1 and cover 2, whereby four ribs 21, two on either side of the membrane near the edge of membrane 7, are slightly deformed, so that an adequate fixation of the membrane is obtained.

Membrane 7 is thereby confined with a certain bias. Since the ribs 21 taper off from membrane 7, seen in sectional view, and extend obliquely in the direction of valve member 5 (see also Figure 10), the deformation during the fixation will be such that the sealing action of ribs 21 is reinforced as a result of the gas pressure within the valve body. The force with which valve housing 1 and cover 2 are pressed together may remain limited thereby, such that the joining of valve housing 1 and cover 2 may be done by hand without using any auxiliary means. In addition to that the sealing action is not sensitive to small variations in the spacing between valve housing 1 and cover 2, as a result of which the above-described clip connection may be used without any problem.

Figure 9 is a sectional view of valve body 5, 7, which shows that at least part of the membrane 7 is substantially conical in its stable form. Because the valve body 5, 7 more or less has this stable form in the closed condition of the valve, it has become apparent in practice that no additional means such as guide bars 8 are required for guiding the valve member 5. Membrane 7 provides the guiding of valve member 5 during the closing of the valve.

Figure 10 is a view of the edge of membrane 7, showing the ribs 21, two on either side of the membrane. The ribs 21 are preferably obliquely oriented and tapered, seen in cross-sectional view. Figures 11 and 12 are perspective views of the valve body 5, 7, wherein the throttle channel 10 and the ribs 20 can be clearly distinguished.

The embodiments described above are to be considered as examples, and it will be apparent to those skilled in the art who have studied the invention that many variations in using the invention are possible within the scope of the appended claims.

## Claims

1. A housing for a gas valve or fluid control component, said housing comprising a first housing portion (1), which is connected to a second housing portion (2) with the interposition of a flexible sealing element (7), whereby each housing portion (1, 2) is provided with a substantially circular contact surface, against which the sealing element (7) abuts, characterized in that the two housing portions (1, 2) are kept a predetermined distance apart by connecting means (12, 15, 16, 17) comprising a clip connection, whereby a spring clip (15) engages parts of said first housing portion (1) as well as parts of the second housing portion (2) whilst fixing said portions with respect to each other.

2. A housing according to claim 1, characterized in that said clip consists of a substantially annular metal bar having a circular cross-section, which is capable of abutment against radially oriented stop surfaces of the two housing portions (1, 2).

3. A housing according to claim 2, characterized in that the one housing portion (1) is near its contact surface provided with a groove (16) which is open in radially outward direction, in which groove (16) said clip (15) may be provided, said groove (16) at a number of locations being provided with a recess extending behind said clip (15), into which connecting parts (17) of the other housing portion (2) can extend, said connecting parts (17) having a hook-shaped part (12), which is capable of moving the clip (15) against its spring force when the housing portions (1, 2) are brought into abutment with each other, and which is provided with a stop surface which abuts against said clip (15), thus preventing said housing portions (1, 2) from being moved apart.

4. A housing according to claim 3, characterized in that said connecting parts (17) are provided with a cylindrical stop surface at their radial inner side, which stop surface surrounds a cylindrical surface of said one housing portion (1) in the interconnected position of said housing portions.

5. A housing according to any one of the preceding claims, characterized in that said sealing element (7) forms part of a membrane which is positioned within said housing (1, 2).

6. A method for connecting two housing portions (1, 2) together, one housing portion (1) comprising a groove with a spring clip (15), wherein a sealing element (7) is placed between contact surfaces of the two housing portions (1, 2), and the other housing portion (2) being pressed against said one housing portion (1) by hand, so that connecting parts (17) of the other housing portion (2) move said spring clip (15) against its spring force, after which said connecting parts (17) engage behind said spring clip (15) and butt against said clip (15) with a stop surface, so that the two housing portions (1, 2) are interconnected.

## Patentansprüche

1. Ein Gehäuse für ein Gasventil oder eine hydraulische Steuerkomponente, das einen ersten Gehäuseteil (1) umfaßt, der mit einem zweiten Gehäuseteil (2) durch ein zwischen beiden angeordnetes flexibles Dichtungselement (7) verbunden ist, wobei jeder Gehäuseteil (1, 2) mit einer im wesentlichen kreisförmigen Kontaktfläche ausgestattet ist, an der das Dichtungselement (7) anliegt, dadurch gekennzeichnet, daß die beiden Gehäuseteile (1,2) durch Verbindungsmittel (12, 15, 16, 17) in einem vorbestimmten Abstand voneinander entfernt gehalten werden, die eine Klemmverbindung aufweisen, wobei eine Federklemme (15) mit Teilen des besagten ersten Gehäuseteils (1) sowie mit Teilen des zweiten Gehäuseteils (2) in Eingriff stehen und die Gehäuseteile in Bezug zueinander festlegen.

2. Ein Gehäuse gemäß Anspruch 1, dadurch gekennzeichnet, daß besagte Klemme aus einem im wesentlichen ringförmigen Metallreifen besteht, der einen kreisförmigen Querschnitt aufweist und zur Anlage an radial orientierten Anschlagflächen der zwei Gehäuseteile (1, 2) eingerichtet ist.

3. Ein Gehäuse gemäß Anspruch 2, dadurch gekennzeichnet, daß der eine Gehäuseteil (1) nahe seiner Kontaktfläche mit einer Nut (16) versehen ist, die in Richtung radial nach außen offen ist und in der besagte Klemme (15) angeordnet sein kann, besagte Nut (16) ist an einer Anzahl von Stellen mit einer Aussparung versehen ist, die sich hinter die Klemme (15) erstreckt und in die Verbindungsteile (17) des anderen Gehäuseteils (2) eingreifen können, besagte Verbindungsteile (17) weisen einen hakenförmigen Teil (12) auf, der zur Auslenkung der Klemme (15) gegen ihre Federkraft dient, wenn die Gehäuseteile (1, 2) aneinander zur Anlage gebracht werden, und der mit einer Anschlagfläche ausgestattet ist, die an der Klemme (15) anliegt und ein Auseinanderbewegen der besagten Gehäuseteile (1, 2) verhindert.

4. Ein Gehäuse gemäß Anspruch 3, dadurch gekennzeichnet, daß besagte Verbindungsteile (17) mit einer zylindrischen Anschlagfläche an ihrer radialen Innenseite ausgestattet sind, die eine zylindrische Oberfläche des besagten einen Gehäuseteils (1) umgibt, wenn sich besagte Gehäuseteile (1, 2) in ihrer miteinander verbundenen Position befinden.

5. Ein Gehäuse gemäß Anspruch einem der vorausgehenden Ansprüche, dadurch gekennzeichnet, daß besagtes Dichtungselement (7) einen Teil einer Membrane bildet, die in besagtem Gehäuse (1, 2) angeordnet ist.

6. Ein Verfahren zum Verbinden zweier Gehäuseteile (1, 2) miteinander, von denen der eine Gehäuseteil (1) eine Nut mit einer Federklemme (15) aufweist, wobei ein Dichtungselement (7) zwischen Kontaktflächen der beiden Gehäuseteile (1, 2) angeordnet ist, und der andere Gehäuseteil (2) von Hand gegen gegen den einen Gehäuseteil (1) gedrückt wird, so daß Verbindungsteile (17) des anderen Gehäuseteils (2) besagte Federklemme (15) gegen ihre Federkraft auslenken, wonach besagte Verbindungsteile (17) hinter besagte Federklemme (15) greifen und mit einer Anschlagfläche an besagter Klemme (15) anliegen, so daß die zwei Gehäuseteile (1, 2) miteinander verbunden sind.

## Revendications

1. Boîtier pour soupape à gaz ou composant pour la commande d'un fluide, ledit boîtier comprenant une première partie de boîtier (1) qui est connectée à une seconde partie de boîtier (2), avec interposition d'un élément d'étanchéité souple (7), où chaque partie de boîtier (1, 2) comporte une surface de contact essentiellement circulaire contre laquelle bute l'élément d'étanchéité (7), caractérisé en ce que les deux parties de boîtier (1, 2) sont maintenues écartées l'une de l'autre, d'une distance prédéterminée, par des moyens de connexion (12, 15, 16, 17) comprenant une liaison par clip, où un clip élastique (15) s'engage avec des parties de ladite première partie de boîtier (1) aussi bien qu'avec des parties de la seconde partie de boîtier (2), tout en fixant lesdites parties l'une par rapport à l'autre.

2. Boîtier selon la revendication 1, caractérisé en ce que ledit clip est constitué d'une barre métallique essentiellement annulaire ayant une section transversale circulaire, qui est susceptible de venir buter contre des surfaces d'arrêt orientées radialement des deux parties de boîtier (1, 2).

3. Boîtier selon la revendication 2, caractérisé en ce que la première partie de boîtier (1) comporte au voisinage de sa surface de contact une gorge (16) qui est ouverte dans une direction dirigée radialement vers l'extérieur, ledit clip (15) pouvant être prévu dans la gorge (16), ladite gorge (16), en un certain nombre d'emplacements, comportant une cavité s'étendant derrière ledit clip (15), dans laquelle des parties de connexion (17) de l'autre partie de boîtier (2) peuvent s'étendre, lesdites parties de connexion (17) ayant une partie (12) en forme de crochet, qui est susceptible de déplacer le clip (15) à l'encontre de sa force élastique, quand les parties de boîtier (1, 2) sont amenées en butée l'une avec l'autre, et qui comporte une surface de butée qui vient buter contre ledit clip (15), empêchant ainsi lesdites parties de boîtier (1, 2) d'être écartées.

4. Boîtier selon la revendication 3, caractérisé en ce que lesdites parties de connexion (17) comprennent une surface d'arrêt cylindrique au niveau de leur côté interne radial, laquelle surface d'arrêt entoure une surface cylindrique de ladite première partie de boîtier (1) dans la position interconnectée desdites parties de boîtier.

5. Boîtier selon l'une quelconque des revendications précédentes, caractérisé en ce que ledit élément d'étanchéité (7) forme partie d'une membrane qui est positionnée à l'intérieur dudit boîtier (1, 2).

6. Procédé de liaison de deux parties de boîtier (1, 2) l'une à l'autre, la première partie de boîtier (1) comprenant une gorge avec un clip élastique (15), dans lequel un élément d'étanchéité (7) est placé entre les surfaces de contact des deux parties de boîtier (1, 2), et l'autre partie de boîtier (2) étant pressée à la main contre ladite première partie de boîtier (1), de sorte que les parties de connexion (17) de l'autre partie de boîtier (2) déplacent ledit clip élastique (15) contre sa force élastique, après quoi lesdites parties de connexion (17) s'engagent derrière ledit clip élastique (15) et viennent buter contre ledit clip (15) avec une surface d'arrêt, de sorte que les deux parties de boîtier (1, 2) sont interconnectées.
